# EUROPEAN PATENT SPECIFICATION

(11) **EP 2 679 053 B1**
(45) Date of publication and mention of the grant of the patent: **01.11.2017**
(21) Application number: 11859111.4
(22) Date of filing: 25.02.2011
(51) Int. Cl.: H04W 52/02, H01Q 3/26, H04B 7/06, H04B 7/08, H04W 16/28

(54) **METHOD AND ARRANGEMENT FOR REDUCING POWER CONSUMPTION IN A COMMUNICATION DEVICE**
VERFAHREN UND VORRICHTUNG ZUR SENKUNG DES ENERGIEVERBRAUCHES BEI EINEM KOMMUNIKATIONSGERÄT
PROCÉDÉ ET DISPOSITIF POUR RÉDUIRE LA CONSOMMATION D'ÉNERGIE DANS UN DISPOSITIF DE COMMUNICATION

(43) Date of publication of application: 01.01.2014
(73) Proprietor: Telefonaktiebolaget LM Ericsson (publ), 164 83 Stockholm (SE)
(72) Inventor: RUNE, Johan, S-181 30 Lidingö (SE); ERIKSSON, Erik, S-585 93 Linköping (SE); SORIES, Sabine, 50937 Köln (DE); WIBERG, Niclas, S-585 97 Linköping (SE)
(74) Representative: Brann AB
(86) International application number: PCT/SE2011/050218
(87) International publication number: WO 2012/115553

(56) References cited:
- WO-A1-97/41705
- WO-A1-2009/014248
- WO-A1-2009/137092
- WO-A2-01/24385
- WO-A2-2009/046409
- US-A- 5 329 522
- US-A1- 2009 034 452
- US-B1- 6 301 238

## Description

### TECHNICAL FIELD

Embodiments herein relate to a base station, a communication device and methods therein. In particular, it relates to reducing power consumption in the communication device.

### BACKGROUND

Communication devices such as mobile stations are also known as e.g. mobile terminals, wireless terminals and/or User Equipments (UEs). Mobile stations are enabled to communicate wirelessly in a cellular communications network or wireless communication system, sometimes also referred to as a cellular radio system. The communication may be performed e.g. between two mobile stations, between a mobile station and a regular telephone and/or between a mobile station and a server via a Radio Access Network (RAN) and possibly one or more core networks, comprised within the cellular communications network.

Mobile stations may further be referred to as mobile telephones, cellular telephones, or laptops with wireless capability, just to mention some further examples. The mobile stations in the present context may be, for example, portable, pocket-storable, hand-held, computer-comprised, or vehicle-mounted mobile devices, enabled to communicate voice and/or data, via the radio access network, with another entity, such as another mobile station or a server.

The cellular communications network covers a geographical area which is divided into cell areas, wherein each cell area being served by a base station, e.g. a Radio Base Station (RBS), which sometimes may be referred to as e.g. "eNB", "eNodeB", "NodeB", "B node", or BTS (Base Transceiver Station), depending on the technology and terminology used. The base stations may be of different classes such as e.g. macro eNodeB, home eNodeB or pico base station, based on transmission power and thereby also cell size. A cell is the geographical area where radio coverage is provided by the base station at a base station site. One base station, situated on the base station site, may serve one or several cells. Further, each base station may support one or several communication technologies. The base stations communicate over the air interface operating on radio frequencies with the mobile stations within range of the base stations.

In some radio access networks, several base stations may be connected, e.g. by landlines or microwave, to a radio network controller, e.g. a Radio Network Controller (RNC) in Universal Mobile Telecommunications System (UMTS), and/or to each other. The radio network controller, also sometimes termed a Base Station Controller (BSC) e.g. in GSM, may supervise and coordinate various activities of the plural base stations connected thereto. GSM is an abbreviation for Global System for Mobile Communications (originally: Groupe Special Mobile).

In 3rd Generation Partnership Project (3GPP) Long Term Evolution (LTE), base stations, which may be referred to as eNodeBs or even eNBs, may be directly connected to one or more core networks.

UMTS is a third generation mobile communication system, which evolved from the GSM, and is intended to provide improved mobile communication services based on Wideband Code Division Multiple Access (WCDMA) access technology. UMTS Terrestrial Radio Access Network (UTRAN) is essentially a radio access network using wideband code division multiple access for mobile stations. The 3GPP has undertaken to evolve further the UTRAN and GSM based radio access network technologies.

According to 3GPP/GERAN, a mobile station has a multi-slot class, which determines the maximum transfer rate in the uplink and downlink direction. GERAN is an abbreviation for GSM EDGE Radio Access Network. EDGE is further an abbreviation for Enhanced Data rates for GSM Evolution.

In the context of this disclosure, the expression DownLink (DL) is used for the transmission path from the base station to the mobile station. The expression UpLink (UL) is used for the transmission path in the opposite direction i.e. from the mobile station to the base station.

A vision of a development of the communication in cellular networks comprises huge numbers of small autonomous devices, which typically, more or less infrequently, e.g. once per week to once per minute, transmit and receive only small amounts of data. These devices are assumed not to be associated with humans, but are rather sensors or actuators of different kinds, which communicate with application servers, which configure the devices and receive data from them, within or outside the cellular network. Hence, this type of communication is often referred to as machine-to-machine (M2M) communication and the devices may be denoted machine devices (MDs). In the 3GPP standardization the corresponding alternative terms are machine type communication (MTC) and machine type communication devices (MTC devices). Note that in a wider context an MTC device is just another type of User Equipment, albeit with certain special characteristics.

With the nature of MTC devices and their assumed typical uses follow that they will often have to be very power efficient, since external power supplies will often not be available and since it is neither practically nor economically feasible to frequently replace their batteries.

If a large scale of number of connected devices is to be realistic, MTC devices have to be not only power efficient, but also cheap, simple and small, wherein the two latter properties may follow as consequences of the former. This unavoidably has consequences for the implementation of the MTC devices. For instance, they are likely to have less advanced transceivers than regular user equipments. In addition, there may be limited possibilities to fit an efficient antenna in/on the device and dual/multiple antennas may often not be implemented in order to save space and cost.

The above mentioned limitations associated with MTC devices, including power scarceness, simple transceivers and antennas, have negative impact on the MTC devices operation in a cellular network. The poorer receiver means that cell coverage in practice will be smaller for MTC devices than for regular user equipments, even in the same cells, since MTC devices will require greater Signal-to-Noice Ratio/ Signal-to-Interference Ratio (SNR)/(SIR) to receive transmissions from the base station properly. In addition, the poorer transmission possibilities will make the transmissions less efficient, which may cause more power to be consumed than if the transmitter would have been advanced, thereby counteracting the required power efficiency.

US 6301238 describes a directional beam generative apparatus, that forms directional antenna beam patterns for the communication of communication signals with remote communication stations operable in a TDMA communication system. WO 2009/014248 describes DRX/DTX configuration for mixed real time and non-real time transmission scenarios in a mobile telecommunications environment. US 5708441 depicts a method for rotating the directivity of base station antennas, so that the directivity is continuously swept or changed in steps, making revolutions around the cell. Furthermore, the rotation speed or step frequency may be synchronized with the transmission of control channel(s) from the base station, so that a mobile station being passed by a sweeping or stepping antenna beam (117) will have improved channel conditions at least long enough to receive the required control channel(s).

Although the method described in US 5708441 periodically improves the channel conditions for mobile stations, the mobile station may waste substantial power on reception and transmission events when the channel conditions require more power or are even too poor for success which in turn may cause even more resource waste in the form of retransmissions or repeated reception/transmission/access attempts.

### SUMMARY

It is therefore an object of embodiments herein to provide a way of improving radio performance for communication devices.

According to a first aspect of embodiments herein, the object is achieved by a method in a communication device for reducing power consumption in the communication device. The communication device and a base station are comprised in a cellular communications network. The communication device measures at least one antenna beam timing based on detecting a channel condition. The communication device obtains information about an antenna beam of the base station. The antenna beam will be dynamically controlled via a dynamic directional antenna arrangement. The antenna beam will be configured by the base station based on the measured at least one antenna beam timing. The antenna beam will be perceived by the communication device in time periods. The information relates to when in time a time period of the time periods starts and a duration of the time period. The communication device obtains information about the antenna beam of the base station by obtaining the information from the base station. A threshold on a channel quality required for uplink transmission is set such that a time duration when the threshold value is exceeded, the communication device is covered by the antenna beam. The communication device refrains from attempting to receive or transmit data using the antenna beam, when being out of the time periods, based on the obtained information. During the refraining no power is consumed for attempting to receive or transmit data using the antenna beam.

According to a second aspect of embodiments herein, the object is achieved by a method in a base station for enabling reduction of power consumption in a communication device. The communication device and the base station are comprised in a cellular communications network. The base station serves a cell comprising the communication device. The base station directs an antenna beam such that it provides coverage of different places in the cell in different time periods. The antenna beam will be dynamically controlled via a dynamic directional antenna arrangement. The antenna beam is configured based on measurement, by the communication device, of at least one antenna beam timing based on detecting a channel condition.

The base station sends information about the antenna beam to the communication device. The antenna beam will be perceived by the communication device in time periods. The information relates to when in time a time period of the time periods starts and a duration of the time period. A threshold on a channel quality required for uplink transmission is set such that a time duration when the threshold value is exceeded, the communication device is covered by the antenna beam This enables the communication device, to refrain from attempting to receive or transmit data using the antenna beam, when being out of the time periods, based on the sent information. During the refraining, no power is consumed for attempting to receive or transmit data using the antenna beam.

According to a third aspect of embodiments herein, the object is achieved by a communication device for reducing power consumption in the communication device. The communication device and a base station are comprised in a cellular communications network. The communication device comprises an obtaining unit configured to obtain information about an antenna beam of the base station. The antenna beam will be dynamically controlled via a dynamically directional antenna arrangement. The antenna beam will be configured based on a measured at least one antenna beam timing by the communication device, the measurement being based on detection of a channel condition. The antenna beam will be perceived by the communication device in time periods. The information relates to when in time a time period of the time periods starts and a duration of the time period. The obtaining unit is further configured to obtain information about the antenna beam by obtaining the information from the base station. A threshold on a channel quality required for uplink transmission is set such that a time duration when the threshold value is exceeded, the communication device is covered by the antenna beam. The communication device further comprises a processing unit configured to refrain from attempting to receive or transmit data using the antenna beam when being out of the time periods, based on the obtained information. During the refraining no power is consumed for attempting to receive or transmit data using the antenna beam.

According to a fourth aspect of embodiments herein, the object is achieved by a base station for enabling reduction of power consumption in a communication device. The communication device and the base station are comprised in a cellular communications network. The base station serves a cell comprising the communication device. The base station comprises a beam antenna configured to direct the antenna beam such that it provides coverage of different places in the cell in different time periods. The beam antenna is a dynamically directional antenna arrangement comprising one or more antennas or antenna elements. The antenna beam is configured based on measurement, by the communication device, of at least one antenna beam timing based on detecting a channel condition. The base station further comprises a sending unit configured to send information about the antenna beam to the communication device. The antenna beam will be perceived by the communication device in time periods. The information relates to when in time a time period of the time periods starts and a duration of the time period. A threshold on a channel quality required for uplink transmission is set such that a time when the threshold value is exceeded, the communication device is covered by the antenna beam. This enables the communication device when being out of a time period, to refrain from attempting to receive or transmit data using the antenna beam when being out of the time periods based on the sent information. During the refraining no power is consumed for attempting to receive or transmit data using the antenna beam.

Since the communication device obtains information about a time period wherein an antenna beam will be perceived by the communication device, it can refrain from attempting to receive or transmit data using the antenna beam. During the refraining no
power is consumed for attempting to receive or transmit data using the antenna beam. This in turn results in an improved radio performance for communication devices.

An advantage with embodiments herein is that cell coverage and cell edge performance, as well as reception and transmission conditions in general are in practice increased for communication devices such as simple MTC devices.

A further advantage with embodiments herein is that it enables communication
devices such as MTC devices to transmit using lower power, thereby saving precious battery power.

A further advantage with embodiments herein is that the communication devices may be synchronized with improved channel conditions, thereby making the power saving property of the embodiments herein very efficient, as inefficient or even useless reception and/or transmission attempts may be avoided.

A further advantage with embodiments herein is that energy efficiency of the cellular communications network, may be improved through "occasional coverage" and better resource utilization.

### BRIEF DESCRIPTION OF THE DRAWINGS

Examples of embodiments herein are described in more detail with reference to attached drawings in which:
Figure 1 is a schematic block diagram illustrating embodiments in a cellular communications network.
Figure 2 is a flowchart depicting embodiments of a method in a communication device.
Figure 3 is a schematic block diagram illustrating embodiments of a communication device.
Figure 4 is a flowchart depicting embodiments of a method in a base station.
Figure 5 is a schematic block diagram illustrating embodiments in a cellular communications network.
Figure 6 is a schematic block diagram illustrating embodiments in a cellular communications network.
Figure 7 is a schematic block diagram illustrating embodiments in a base station.

### DETAILED DESCRIPTION

Embodiments will be exemplified in the following non-limiting description. Embodiments herein uses predictably occurring beam-forming in a base station, thereby periodically or at least predictably, improving reception and transmission conditions in a predictable manner for e.g. MTC devices within the cell and around the cell's edges.

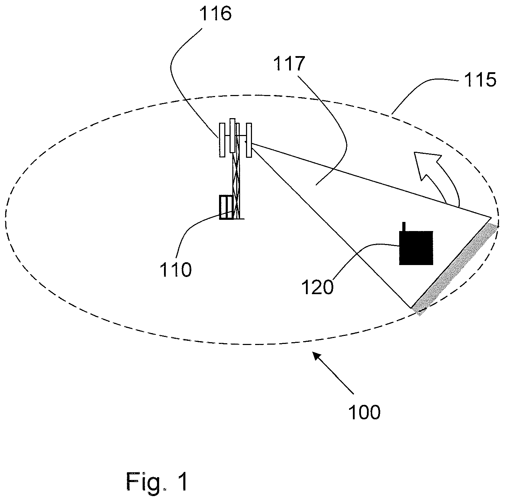

**Figure 1** depicts a **cellular communications network 100** in which embodiments herein may be implemented. The cellular communications network 100 is a cellular communication network such as an LTE, WCDMA, GSM network, any 3GPP cellular network, or any cellular network or system.

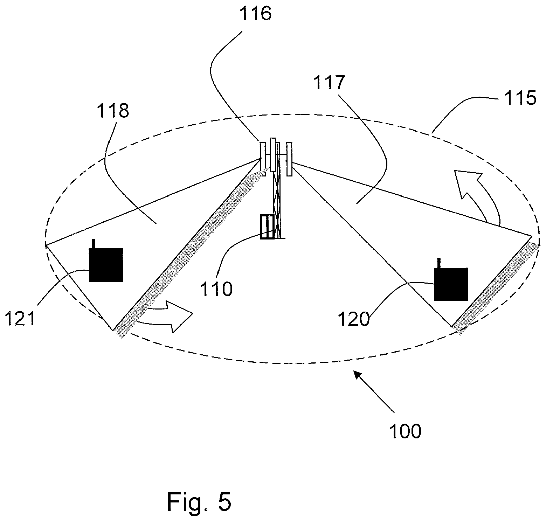

The cellular communications network 100 comprises a **base station 110.** The base station 110 is a radio base station serving **a cell 115.** The base station 110 may e.g. be a radio base station such as an eNB, eNodeB, or a Home Node B, a Home eNode B, a GSM/EDGE radio base station or any other network unit capable to serve a user equipment or a machine type communication device in a cellular communications system. The base station 110 comprises a **beam antenna 116.** The beam antenna 116 is a dynamically directional antenna arrangement comprising one or more antennas or antenna elements, which may be dynamically controlled to radiate greater power in one or more directions, the so-called **beam 117,** allowing for increased performance on transmit and receive and reduced interference from unwanted sources. The antenna beam 117 is directed such that it provides coverage of different places in the cell 115 at different time periods. According to embodiments herein this may e.g. be performed by continuously sweeping a 360° lap regularly in time with or without a time interval between each lap, and/or by stepwise covering a 360° lap with a specific angle in every step. In some embodiments the beam 117 is not monotonically moved in the same angular rotation direction in the horizontal plane, but the location covered by the beam 117 may essentially hop between different locations according to a regular pattern or an irregular pattern, e.g. governed by a pseudo random sequence, as long as the beam's appearance in each location is predictable. In some embodiments a **second beam 118** is used. How this is performed will be described more in detail below. (The second beam is shown in Figure 5.)

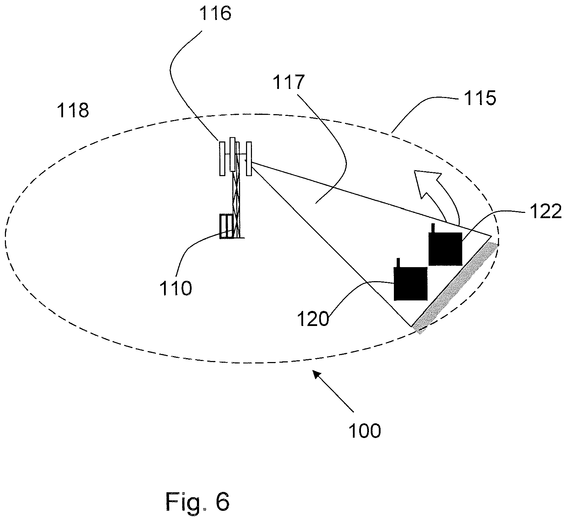

A **communication device 120** is located within the cell 115. The communication device 120 is configured to communicate within the cellular communications network 100 via the **base station 110** over a radio link **130** when the communication device 120 is present in the cell 115 served by the base station 110. A number of other communication devices may also be located within the cell 115, for example a **second communication device 121** and a **third communication device 122.** These are described below and shown in respective Figures 5 and 6.

The communication device 120 may be a machine type communication device, i.e. a small autonomous device, such as e.g. a machine-to-machine communication device, a machine device which typically, more or less infrequently, e.g. once per week to once per minute, transmits and receives only small amounts of data.

The communication device 120 may also be a user equipment such as e.g. a mobile terminal or a wireless terminal, a mobile phone, a computer such as e.g. a laptop, Personal Digital Assistant (PDA), or any other radio network unit capable to communicate over a radio link in a cellular communications system.

The other communication devices for example the second communication device 121 and the third communication device 122 may be of any kind as described above.

In the text below, embodiments herein will first be described seen from the perspective of the communication device 120 and secondly described seen from the base station perspective. According to an example scenario, the communication device 120 is present in the cell 115 served by the base station 110 and is to start or later on perform some communication with the wireless communication network 100 via the base station 110.

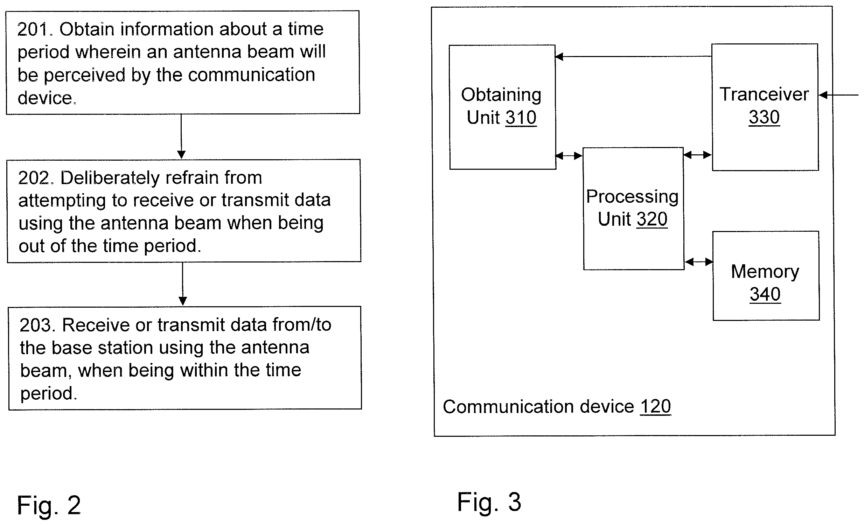

Embodiments of a method in the communication device 120 for reducing power consumption in the communication device 120 will now be described with reference to the flowchart depicted in **Figure 2****.** As mentioned above, the communication device 120 and the base station 110 are comprised in a cellular communications network 100.The communication device 120 may be represented by a MTC device or a user equipment.

The method comprises the following actions, which actions may as well be carried out in another suitable order than described below.

### Action 201

The communication device 120 obtains information about an antenna beam 117 of the base station 110. The beam 117 will be perceived by the communication device 120 in time periods. The information relates to when in time a time period starts and the duration of the time period.

In some embodiments, the obtaining of the information about the antenna beam 117 is performed by receiving information from the base station 110 about the communication device 120 being scheduled a Discontinuous Reception (DRX) cycle and/or a Discontinuous Transmission, (DTX) cycle, such that a passive part of the DRX or DTX cycle occurs when being out of the time period. I.e. in this way the information is obtained implicit. DRX means that the communication device 120 is configured with cyclically reoccurring alternating periods, where the communication device 120 may receive dedicated transmissions from the base station 110 during one period, the active part of the DRX cycle, but may not receive dedicated transmissions during the next period, the passive part of the DRX cycle. A DRX cycle thus comprises two periods respectively constituting an active part and a passive part, or vice versa. Hence, during the active part of a DRX cycle the communication device 120 has to monitor the appropriate radio channel(s) in order to be able to receive potential transmissions intended for the communication device 120. On the other hand, during the passive part of a DRX cycle the communication device 120 do not have to monitor any radio channel(s) and may thus turn off its receiver circuitry and optionally enter a sleep mode in order to save energy. DTX is defined similarly, but instead of providing periods where the communication device 120 alternately may and may not receive dedicated transmissions, DTX configuration provisions periods where the communication device 120 alternate between being allowed to transmit and not being allowed to transmit.

In some embodiments, the obtaining of the information about the antenna beam 117 is performed by receiving information from the base station 110 about the communication device 120 being scheduled pre-allocated resources for uplink or downlink transmission such that the pre-allocated resources are scheduled to occur when being within the time period. I.e. also in this way the information is obtained implicit. The pre-allocated uplink resources shall be synchronized with the beam. The pre-allocation may e.g. be in the form of semi-persistent scheduling. When using semi-persistent scheduling for a communication device, a base station does not schedule every transmission/reception occasion, e.g. in the form of a time and frequency resource, but rather schedules a periodically reoccurring resource, or pattern of resources, for transmission or reception for the communication device.

In some embodiments, the information comprises that the beam 117 will be perceived by the communication device 120 in time periods. In these but also in other embodiments herein, the information relating to when in time a time period starts and the duration of the time period is obtained by measuring conditions of the channel. In these embodiments the communication device 120 may measure the channel conditions, e.g. based on the quality of a received reference signal. Provided that base station 110 uses a periodic beam forming pattern, the communication device 120 will detect a periodically reoccurring improvement of the channel conditions, coinciding with the beam 117 covering the location of the communication device120. In this way the communication device 120 may autonomously learn the periodicity of the beam pattern and/or the points in time when the communication device 120 may expect to be covered by the beam 117, as well as the duration of periods of coverage.

The obtaining of information about the antenna beam 117 of the base station 110 may be performed by receiving from the base station 110, information about the periodicity of the time period. In these but also in other embodiments herein, the information of when in time a time period starts and the duration of the time period may be obtained by measuring a time period when it occurs.

For example, a hybrid of timing of the predictable antenna beam 117and an autonomous detection of the beam may be provided, if the base station 110 informs the communication device 120 of the periodicity of the beam 117, i.e. the period with which the beam will reappear in the same direction, or cover the same location, while the communication device 120 itself is responsible for detecting at what time(s) during a period the antenna beam 117 is directed towards the communication device 120, i.e. the "phase" of the antenna beam movement. The communication device 120 may learn this from measuring the channel conditions, e.g. measuring a downlink reference signal sent from the base station 110. The measurements may be made less and less frequent, as the resulting conclusion on the beam timing becomes more reliable and accurate. Alternatively the communication device 120 may learn both periodicity and phase autonomously and gradually rely more on the learnt timing. This feature may also comprise that the communication device 120 informs the base station 110 of its beam timing measurements, so that the base station may configure the communication device 120 with a matching DRX cycle. This feature of autonomous learning of the predictable antenna beam 117 relieves the base station 110 from having to measure the direction of the MTC devices.

In some embodiments the obtaining of information about an antenna beam 117 of the base station 110 is performed by obtaining the information from the base station 110. In these or other embodiments herein a threshold on the channel quality required for uplink transmission may be set such that the time when the threshold value is exceeded, coincides with the start in time of the time period and the duration of the time period. Setting a threshold on the channel quality required for uplink transmission for the communication device 120 is one way of avoiding wasting power on unnecessarily high power transmissions. Combining this with an occasionally appearing antenna beam 117 will achieve a power efficient transmission, since the threshold may be set so that it essentially only is exceeded when the communication device 120 is covered by the antenna beam 117. If the threshold is exceeded at some other time, this would provide for opportunistic utilization of sporadically occurring good channel conditions in addition to the antenna beam 117. The communication device 120 may estimate the channel conditions from a downlink beam-formed reference signal or feedback from the base station 110 on uplink reference signals. Also this feature of autonomous detection of the predictable antenna beam 117 relieves the base station from having to measure the direction of the communication device 120. With this mechanism the antenna beam 117 does not have to be predictable, as the channel quality threshold takes care of synchronizing the communication devices' 120 transmissions with the antenna beam 117. The feature may however still be combined with a predictably occurring beam, providing the advantage that the communication device 120 only has to check for transmission opportunities when it is covered by the beam.

### Action 202

When the communication device 120 is out of the time period, it refrains from attempting to receive or transmit data using the antenna beam 117. This action is performed deliberately. During the refraining no power is consumed for attempting to receive or transmit data using the antenna beam 117.

### Action 203

When the communication device 120 is within the time period, it receives or transmits data from or to the base station 110 over a channel using the antenna beam 117.

The communication device 120 is covered by the antenna beam 117 not only at a predictable time but also for a predictable time period. Hence, the communication device 120 would preferably complete an entire communication event during this time period. Whether this is possible depends largely on the amount of data to transmit during a communication event and the number of message exchanges in uplink and downlink e.g. between the communication device 120 and an application server, but it may also be affected by buffer status reports from the communication device 120 to the base station 110 and scheduling decisions in the base station 110.

Therefore in some scenarios, when the communication device 120 has not completed a communication event by receiving or transmitting data from or to the base station 110 when being within one time period. The communication device 120 may then perform any of the Actions 204 or 205.

### Action 204

The communication device 120 may return to an idle state until a subsequent time period wherein the antenna beam 117 will be perceived by the communication device 120, and when the subsequent time period occurs, continue the communication event.

### Action 205

As an alternative to Action 204, the communication device 120 may remain in a connected state, and when the subsequent time period occurs, continue the communication event.

The communication device 120 may further stay in connected state and continue communicating without beam coverage, and thus with worse radio conditions, until the communication event is complete.

As an alternative or as a complement to the latter, the base station 110 may facilitate completion of the communication event by using beam-forming towards the communication device 120 whenever it is scheduled, even after the "general beam" has seized to cover the communication device 120.

To perform the method actions in the communication device 120 described above for reducing power consumption in the communication device 120, the communication device 120 comprises the following arrangement depicted in **Figure 3****.** As mentioned above the communication device 120 and the base station 110 are comprised in the cellular communications network 100. The communication device 120 may e.g. be represented by a MTC device or a user equipment.

The communication device 120 comprises **an obtaining unit 310** configured to obtain information about the antenna beam 117 of the base station 110. The antenna beam 117 will be perceived by the communication device 120 in time periods. The information relates to when in time a time period starts and the duration of the time period.

In some embodiments the obtaining unit 310 is further configured to obtain information about the antenna beam 117 by receiving information from the base station 110 about the communication device 120 being scheduled a Discontinuous Reception, DRX, cycle and/or a Discontinuous Transmission, DTX, cycle such that a passive part of the DRX or DTX cycle occurs when being out of the time period.

In some embodiments the obtaining unit 310 is further configured to obtain information about an antenna beam 117 by receiving information from the base station 110 about the communication device 120 being scheduled pre-allocated resources for uplink or downlink transmission such that the pre-allocated resources are scheduled to occur when being within the time period.

The obtaining unit 310 may further be configured to obtain information about an antenna beam 117 of the base station 110 by obtaining information that the antenna beam 117 will be perceived by the communication device 120 in time periods. In these embodiments and in any other suitable embodiment herein, the information relating to when in time a time period starts and the duration of the time period is obtained by measuring conditions of a channel.

The obtaining unit 310 may further be configured to obtain information about the antenna beam 117 of the base station 110 by receiving from the base station 110 information about the periodicity of the time period. In these embodiments and in any other suitable embodiment herein, the information of when in time a time period starts and the duration of the time period may be obtained by measuring a time period when it occurs.

The obtaining unit 310 may further be configured to obtain information about an antenna beam 117 of the base station 110 by obtaining the information from the base station 110. In these embodiments and in any other suitable embodiment herein, a threshold of the channel quality required for uplink transmission is set such that the time when the threshold value is exceeded, it coincides with the start in time of the time period and the duration of the time period.

The communication device 120 further comprises **a processing unit 320** configured to refrain from attempting to receive or transmit data using the antenna beam 117 when being out of the time period, during which refraining no power is consumed for attempting to receive or transmit data using the antenna beam 117.

The communication device 120 may further comprise **a transceiver 330** configured to receive or transmit data from or to the base station 110 over the channel using the antenna beam 117, when being within the time period.

In some embodiments, when the transceiver 330 in the communication device 120 has not completed a communication event by receiving or transmitting data from or to the base station 110 when being within one time period, the processing unit 320 further is configured to return to an idle state until a subsequent time period wherein the antenna beam 117 will be perceived by the communication device 120, and when the subsequent time period occurs, continuing the communication event. Or as an alternative, the processing unit 320 may further be configured to remain in a connected state, and when the subsequent time period occurs, continue the communication event. Please note that this feature may be combined with any suitable embodiment above.

The embodiments of the communication device 120 for reducing power consumption in the communication device 120 may be implemented through one or more processors, such as the processing unit 320 in communication device 120 depicted in Figure 3, together with computer program code for performing the actions of the embodiments herein. The program code mentioned above may also be provided as a computer program product, for instance in the form of a data carrier carrying computer program code for performing the embodiments herein when being loaded into communication device 120. One such carrier may be in the form of a CD ROM disc. It is however feasible with other data carriers such as a memory stick. The computer program code may furthermore be provided as pure program code on a server and downloaded to the communication device 120, e.g. remotely.

The communication device 120 may further comprise **a memory 340** comprising one or more memory units. The memory 350 is arranged to be used to store data such as information about the antenna beam 117, the threshold of the channel quality required for uplink transmission, schedulings, and applications to perform the actions of the embodiments herein when being executed in the communication device 120.

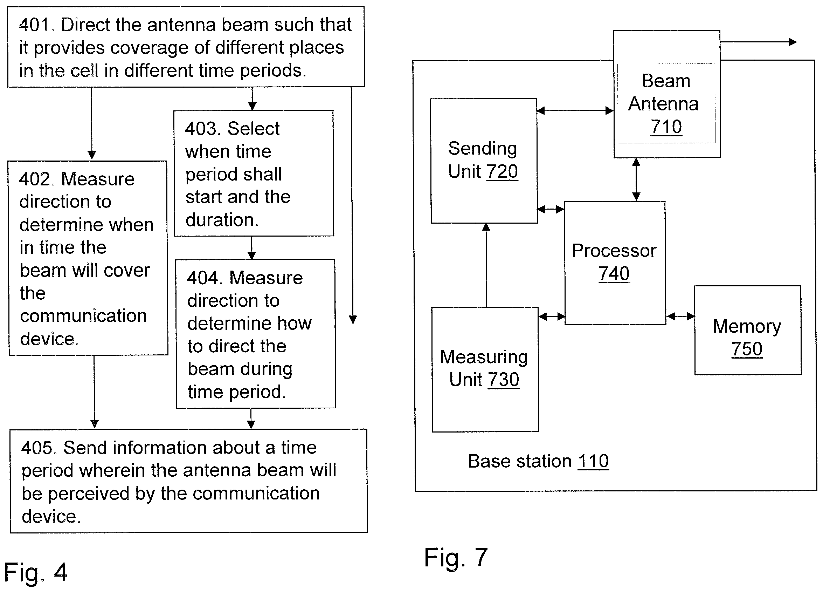

Embodiments of a method in the base station 110 for enabling reduction of power consumption in a communication device 120 will now be described with reference to the flowchart depicted in **Figure 4****.** As mentioned above, the communication device 120 and the base station 110 are comprised in a cellular communications network 100. The base station 110 serves a cell 115 comprising the communication device 120.

In some embodiments, a second communication device is located in the cell 115 and a second antenna beam 118 is used.

The method comprises the following actions, which actions may as well be carried out in another suitable order than described below.

### Action 401

The base station 110 directs the antenna beam 117 such that it provides coverage of different places in the cell 115 in different time periods.

This action 401 may be performed by continuously sweeping a 360° lap regularly in time with or without a time interval between each lap. For example this may be performed by continuously sweeping a 360° lap once every X seconds, with Y seconds between laps. X may e.g. be in the order of 10 seconds or 60 seconds. Y may e.g. be in the order of 10 seconds or 120 seconds.

This action 401 may further be performed by stepwise covering a 360° lap with a specific angle in every step. For example this may be performed by stepwise coverage of a 360° lap with Z° in every step. Z may e.g. be in the order of 10°. In some embodiments the beam 117 is not monotonically moved in the same angular rotation direction in the horizontal plane, but the location covered by the beam 117 may essentially hop between different locations according to a regular pattern or an irregular pattern, e.g. governed by a pseudo random sequence, as long as the beam's appearance in each location is predictable.

This action 401 may further be performed by moving the beam 117 to subsequently cover different locations according to a regular or irregular pattern, providing predictable appearance of the beam 117 in each covered location.

This action 401 may also be performed by directing the antenna beam 117 according to a scheme such that the communication device 120 is out of the time period when a passive part of a DRX and/or DTX cycle of the communication device 120 occurs, by using spatial coordination of the antenna beam 117 and the direction of the communication device 120.

The "lap-wise" coverage may be replaced by any scheme that matches time-wise distributed DRX and DTX cycles or explicitly signalled beam coverage periods with spatial coordination of antenna beam 117 and the communication device's 120 direction. This eliminates the need for specific communication device 120 functionality.

In some embodiments a second communication device 121 is located in the cell 115 and a second antenna beam 118 is used within the base station 110. An example of these embodiments are shown in **Figure 5****.** In these embodiments, the second antenna beam 118 may be directed such that it in second time periods provides coverage of a place in the cell 115 where the second communication device 121 is located. At the cost of more processing of received signals the base station 110 may maintain multiple uplink receive beams 117, 118 simultaneously, thereby being able to cover communication devices 120 and 121 in several directions simultaneously. The base station 110 may utilize this ability to increase the fraction of time that each communication device, for which the uplink beam provides a significant benefit, is covered by the uplink beam, thereby giving the communication devices 120 and 121 more opportunities to transmit with enhanced conditions. The base station 110 may also employ a similar scheme to use two or more downlink transmit beams to simultaneously provide coverage in multiple locations, e.g. covering multiple communication devices, such as communication device 120 and 121.

In an extreme case the base station 110 may be able to cover all the relevant communication devices with uplink beams and/or downlink beams simultaneously, thereby allowing them to transmit and/or receive with enhanced conditions at any time.

The multiple uplink beams 117, 118 do not have to be synchronized with simultaneous multiple downlink beams, and/or downlink beams as the base station 110 knows when it has something to send in the downlink. However, whenever the base station 110 has something to send to one of the communication devices 120 and 121, such as the communication device 120 benefitting significantly from beam-forming, e.g. in response to a received UL transmission, the base station 110 may utilize downlink beam-forming towards the targeted communication device 120.

In general this may mean that the base station 110 tries a large number of different combining weight configurations, for each configuration attempting to detect and decode the communication device signal. The combining weights are complex weight factors used when processing the signals received at different antennas or antenna elements, determining the weight to be given to each received signal when combining all the received signals. A combining weight configuration is a defined set of such combining weights, one for each receiving antenna or antenna element. The transmit timing is decoupled from the communication devices' locations. A possible way to deal with the potentially large consumption of processing power that this may cause may be that the base station 110 buffers the signal and processes it sequentially, at the cost of introducing some delay. The processing may include "all" possible weight configurations, or a subset based on likely locations of communication devices.

In some embodiments, a third communication device 122 is also located in the cell 115. In these embodiments the antenna beam 117 may be shaped such that it will be perceived by both the communication device 120 and the third communication device 122 in the same time periods. These embodiments are shown in **Figure 6****.** I.e. through advanced beam shape control the base station may tailor the beam shape to cover a number of communication devices 120, 121 with known locations at a time. The antenna beam 117 may be continuously reshaped to cover new sets of communication devices 120, 121 in a repetitive, or otherwise predictable, fashion.

The base station 110 may utilize the horizontal dimension when directing the antenna beam 117. In addition to the horizontal direction, the base station 110 may utilize the vertical dimension when directing the antenna beam 117, thus providing even more accurately targeting of different locations.

The beam, whether predictable or not, may further be configured as a separate cell, e.g. "on top of" the regular cell 115. When the communication device 120 requires access outside the coverage of the antenna beam 117, it may switch to an overlapping regular cell such as cell 115. Whether the antenna beam 117 is predictable or not, whether provided in a separate cell 115 or not, the resulting occasional radio coverage, or occasionally improved radio conditions, is a way to make the system more energy efficient than with continuous coverage.

Further variants of embodiments herein may be achieved by leveraging current state of the art and future advanced or Reconfigurable Antenna Systems (RAS) that offer flexible possibilities in terms of tailoring dynamic antenna properties.

The base station may also utilize cell specific features, changing the properties of the entire cell 115, rather than features targeting specific communication devices or sets of communication devices. For instance, instead of letting the antenna beam 117 sweep or otherwise move around to temporarily provide improved conditions in different locations the base station 110 may utilize advanced and/or reconfigurable antenna features, e.g. electronically (i.e. non-mechanically) controlled instantaneous antenna tilt changes, to temporarily increase the range of the cell 115 and thus improve the radio conditions at the cell 115 edge. As previously described in conjunction with beam forming, this would occur at periodic or otherwise predictable time instants, optionally synchronized with DRX cycles of concerned communication devices, in order to allow efficient utilization of the improved conditions.

Another option would be to stepwise change the antenna tilt and combine this with vertical and/or horizontal angle beam-forming, in order to provide improved conditions in a circle sector shaped band, with limited radius interval, area at a certain distance from the base station 110, wherein the distance depends on the tilt and changes as the tilt changes.

Now, back to Figure 4.

### Action 402

In some embodiments the information relating to when in time a time period starts and the duration of the time period is obtained by the base station 110. The base station may e.g. measure the direction to the communication device 120 to determine when in time the antenna beam 117 will cover the location of the communication device 120.

### Action 403

In some embodiments and as an alternative to Action 402, the information relating to when in time a time period starts and the duration of the time period is also obtained by the base station 110. In these embodiments, the base station 110 selects when in time the time period shall start and the duration the time period shall have.

### Action 403

In the alternative embodiments mentioned in Action 403, this action is taken. The base station 110 measures the direction to the communication device 120 to determine which direction to direct the antenna beam 117 to during the selected time period.

For example, as an alternative to Action 402 the base station 110 may first select 403 a suitable point or suitable points in time when the communication device 120 should be covered by the beam 117 and then, after measuring 403 the direction to the communication device 120, determine to direct the beam in the measured direction at the selected point in time or points in time.

In some embodiments, the base station 110 may inform the communication device 120 of the timing of the antenna beam 117 at the communication device's location, so that the communication device 120 may synchronize its unscheduled UL transmissions, e.g. scheduling request and random access with the antenna beam 117. A scheduling request is a signaling message or indication that a communication devices sends to a base station to request allocation of transmission resources for uplink transmission. In cellular communication networks where it is used, random access is a procedure used by a communication device to establish an initial contact with a base station and to synchronize the communication device's uplink transmissions. Before establishing this contact through a random access procedure the communication device cannot request allocation of uplink transmission resources. A communication device may also use a random access procedure, even when a contact with the base station is established, in order to resynchronize its uplink transmissions.

### Action 405

The base station 110 sends information about the antenna beam 117 to the communication device 120. The antenna beam 117 will be perceived by the communication device 120 in time periods. The information relates to when in time a time period starts and the duration of the time period. The information received by the communication device 120 enables the communication device 120 when being out of a time period, to refrain from attempting to receive or transmit data using the antenna beam 117. During the refraining no power is consumed for attempting to receive or transmit data using the antenna beam 117.

In some embodiments, the sending the information about the antenna beam 117 is performed by sending information about **scheduling of a DRX** cycle and/or a DTX cycle, which is performed such that a passive part of the DRX and/or DTX cycle occurs when the communication device 120 is out of the time period.

In some embodiments, the sending of the information about the antenna beam 117 is performed by sending information to the communication device 120 about **scheduling pre-allocated** resources for the communication device 120 for uplink or downlink transmission such that the pre-allocated resources occurs when being within the time period.

To perform the method actions in the base station 110 described above for enabling reduction of power consumption in a communication device 120, the base station 110 comprises the following arrangement depicted in **Figure 7****.** As mentioned above the communication device 120 and the base station 110 are comprised in the cellular communications network 100. The base station 110 serves a cell 115 comprising the communication device 120.

The base station 110 comprises **a beam antenna 710** configured to direct the antenna beam 117 such that it provides coverage of different places in the cell 115 in different time periods. The beam antenna is a dynamically directional antenna arrangement comprising one or more antennas or antenna elements.

In some embodiments, the beam antenna 710 is further configured to direct the antenna beam 117 such that it provides coverage of different places in the cell 115 in different time periods by any of:
- Continuously sweep a 360° lap regularly in time with or without a time interval between each lap; or
- Stepwise cover a 360° lap with a specific angle in every step; and/or
- Move the beam 117 to subsequently cover different locations according to a regular pattern or an irregular pattern, e.g. governed by a pseudo random sequence, providing predictable appearance of the beam 117 in each covered location; and/or
- Direct the antenna beam 117 according to a scheme such that the communication device 120 is out of the time period when a passive part of a DRX and/or DTX cycle of the communication device 120 occurs, by using spatial coordination of the antenna beam 117 and the direction of the communication device 120.

In some embodiments, wherein a second communication device 121 is located in the cell 115, a second antenna beam 118 is used. In these embodiments the beam antenna 710 is further configured to direct the second antenna beam 118 such that it in second time periods provides coverage of a place in the cell 115 where the second communication device 121 is located. Please note that this feature may be combined with any suitable embodiment above.

In some embodiments, a third communication device 122 is located in the cell 115. In these embodiments, the beam antenna 710 may further be configured to shape the antenna beam 117 such that it will be perceived by both the communication device 120 and the third communication device 122 in the same time periods. Please note that this feature may be combined with any suitable embodiment above, also the embodiments using a second antenna beam 118.

The base station 110 further comprises a **sending unit 720** configured to send information about the antenna beam 117 to the communication device 120. The antenna beam 117 will be perceived by the communication device 120 in time periods. The information relates to when in time a time period starts and the duration of the time period. This enables the communication device 120 when being out of a time period, to refrain from attempting to receive or transmit data using the antenna beam 117, during which refraining no power is consumed for attempting to receive or transmit data using the antenna beam 117.

In some embodiments, the sending unit 720 is further configured to send to the communication device 120 information about the antenna beam 117 by sending information about scheduling a Discontinuous Reception , DRX, cycle and/or a Discontinuous Transmission, DTX, cycle such that a passive part of the DRX and/or DTX cycle occurs when the communication device 120 is out of the time period.

In some embodiments, the sending unit 720 is further configured to send information about the antenna beam 117 by sending information to the communication device 120 about scheduling pre-allocated resources for the communication device 120 for uplink or downlink transmission such that the pre-allocated resources occur when being within the time period.

In some embodiments, the base station 110 further comprises **a measuring unit 730** configured to measure a direction to the communication device 120 to determine when in time the antenna beam 117 will cover the location of the communication device 120. The measurement is performed to obtain the information relating to when in time a time period starts and the duration of the time period.

In some embodiments, the base station 110 further comprises **a processor 740** configured to select when in time the time period shall start and the duration the time period shall have. In these embodiments, the measuring unit 730 may be configured to measure a direction to the communication device 120 to determine which direction to direct the antenna beam 117 to during the selected time period.

The embodiments of the base station 110 for enabling reduction of power consumption in a communication device 120 may be implemented through one or more processors, such as the processor 740 in the communication device 120 depicted in Figure 7, together with computer program code for performing actions of the embodiments herein. The program code mentioned above may also be provided as a computer program product, for instance in the form of a data carrier carrying computer program code for performing the embodiments herein when being loaded into the base station 110. One such carrier may be in the form of a CD ROM disc. It is however feasible with other data carriers such as a memory stick. The computer program code may furthermore be provided as pure program code on a server and downloaded to the base station 110.

The base station 110may further comprise **a memory 750** comprising one or more memory units. The memory 750 is arranged to be used to store data such as measurements such as measurements of the direction to the communication device 120 to determine when in time the antenna beam 117 will cover the location of the communication device 120, directions of antenna beams, information relating to when in time a time period starts and the duration of the time period, schedulings, program code and applications to perform the actions of the embodiments herein when being executed in the base station 110.

Since the antenna beam's appearance in time is predictable, the communication device 120, may efficiently utilize the improved conditions for uplink transmissions, especially when the communication device is represented by a MTC devices running time tolerant applications, depending on how frequently the beam appears. Likewise the base station 110 may coordinate its downlink transmissions with the antenna beam 117.

According to embodiments herein, the "lap-wise" coverage may be replaced by any scheme that matches time-wise distributed DRX and/or DTX cycles or explicitly signalled beam coverage periods with spatial coordination of the antenna beam 117 and communication device direction. This gives the base station 110 more flexibility to schedule different communication devices with different frequency and/or different DRX and/or DTX duty cycles. In this way more demanding communication devices such as MTC devices, in terms of traffic volume or delay sensitivity, may be targeted more frequently by the antenna beam 117 then less demanding communication devices. Also, more demanding communication devices such as MTC devices, in terms of traffic volume or delay sensitivity, may be scheduled with DRX and/or DTX duty cycles having a larger fraction of active time than less demanding devices. Furthermore, directions where more communication devices such as MTC devices are located may be targeted more frequently or for longer time periods than other directions.

In some embodiments when the antenna beam 117 provides periodic 360° coverage with intervals between each 360° coverage sequence, whether sweeping, stepwise or otherwise, e.g. hopping irregularly between directions providing extended or more frequent coverage times in directions with more or more demanding communication devices, the base station 110 may schedule DRX and/or DTX cycles for the communication device 120 or explicitly inform the communication device 120 of the 360° coverage periods, so that its active periods coincide with an entire 360° coverage sequence.

This simplifies the operation, since the base station 110 does not have to measure the direction to the communication device 120.

However, the communication device 120 will not as easily be able to benefit from the antenna beam 117 for unsolicited uplink transmissions, as it only has a very coarse knowledge of when the antenna beam 117 will actually cover its location. This may be mitigated by synchronizing the downlink and uplink beam-forming so that the communication device 120 may indirectly detect the presence of the uplink beam from downlink signal, e.g. reference symbols, quality measurements.

Here, variations of the antenna beam forming including adaptation to channel quality of a specific device is be described.

The beam-forming schemes described above may imply the following receiver side behavior at the base station 110:
- Rotating beam, sweeping or moved stepwise: The forming of antenna beam 117 is performed by cyclically vary the beam-forming configuration of combining weights, using correlated antennas or antenna elements, in a manner that moves the receive antenna beam rotationally.
- Non-rotating, cyclically predictable beam-forming schedule: The forming of antenna beam 117 may be performed by cyclically changing combining weights between different configurations in a predictable manner.

An alternative to a pure directional approach is that the base station 110 estimates the uplink channel from the communication device 120 based on a known reference signal which the communication device 120 transmits at a known time. The base station 110 then performs the beam-forming by selecting the combining weights based on the channel estimation.

Yet another variation is that the base station 110 processes multiple simultaneous receive beams, targeting multiple communication devices in different directions simultaneously. This variation has previously been described.

Since the beam's appearance in time is predictable, the communication devices such as communication device 120, the second communication device 121, and the third communication device 122 may efficiently utilize the improved conditions for uplink transmissions, in particular communication devices running time tolerant applications, depending on how frequently the beam appears. Likewise the base station may coordinate its downlink transmissions with the antenna beam.

For optimal efficiency the communication devices such as communication device 120, the second communication device 121, and the third communication device 122, may be synchronized with the antenna beam through DRX cycles and/or DTX cycles, or autonomous self learning.

When using the word "comprise" or "comprising" it shall be interpreted as non-limiting, i.e. meaning "consist at least of".

The embodiments herein are not limited to the above described preferred embodiments. Various alternatives, modifications and equivalents may be used. Therefore, the above embodiments should not be taken as limiting the scope of the invention, which is defined by the appending claims.

## Claims

1. A method in a communication device (120) for reducing power consumption in the communication device (120), wherein the communication device (120) and a base station (110) are comprised in a cellular communications network (100), the method comprising:
*measuring* at least one antenna beam timing based on detecting a channel condition,
*obtaining* (201) information about an antenna beam (117) of the base station (110), which antenna beam (117) will be dynamically controlled via a dynamic directional antenna arrangement, wherein the communication device (120) informs the base station (110) of the measured at least one antenna beam timing, so that the antenna beam (117) will be configured by the base station (110) based on the measured at least one antenna beam timing, which antenna beam (117) will be perceived by the communication device (120) in time periods, which information relates to when in time a time period of the time periods starts and a duration of the time period,
wherein the *obtaining* (201) information about the antenna beam (117) of the base station (110) is performed by obtaining the information from the base station (110), and wherein a threshold on a channel quality required for uplink transmission is set such that a time duration when the threshold value is exceeded, the communication device (120) is covered by the antenna beam (117),
*refraining* (202) from attempting to receive or transmit data using the antenna beam (117), when being out of the time periods, based on the obtained information, during which refraining, no power is consumed for attempting to receive or transmit data using the antenna beam (117).

2. Method according to claim 1, when being within the time period, *receiving* or *transmitting* (203) data from or to the base station (110) over a channel using the antenna beam (117).

3. Method according to any of the claims 1-2, wherein the *obtaining* (201) information about an antenna beam (117) is performed by receiving information from the base station (110) about the communication device (120) being scheduled a Discontinuous Reception, DRX, cycle and/or a Discontinuous Transmission, DTX, cycle, such that a passive part of the DRX or DTX cycle occurs when being out of the time periods, wherein during the passive part of the DRX or DTX cycle the communication device (120) refrains from attempting to receive or transmit data using the antenna beam (117).

4. Method according to any of the claims 1-2, wherein the *obtaining* (201) information about an antenna beam (117) is performed by receiving information from the base station (110) about the communication device (120) being scheduled pre-allocated resources for uplink or downlink transmission such that the pre-allocated resources are scheduled to occur when being within the time period.

5. Method according to any of the claims 2-4, wherein when the communication device (120) has not completed a communication event by *receiving or transmitting* (203) data from or to the base station (110) when being within one time period, performing any of:
*returning* (204) to an idle state until a subsequent time period wherein the antenna beam (117) will be perceived by the communication device (120), and when the subsequent time period occurs, continuing the communication event; or
*remaining* (205) in a connected state, and when the subsequent time period occurs, continuing the communication event.

6. A method in a base station (110) for enabling reduction of power consumption in a communication device (120), wherein the communication device (120) and the base station (110) are comprised in a cellular communications network (100), and wherein the base station (110) serves a cell (115) comprising the communication device (120), the method comprising:
*directing* (401) an antenna beam (117) such that it provides coverage of different places in the cell (115) at different time periods, which antenna beam (117) will be dynamically controlled via a dynamic directional antenna arrangement, wherein the antenna beam (117) is configured based on measurement, performed by the communication device (120) and communicated to the base station (110), of at least one antenna beam timing based on detecting a channel condition,
*sending* (405) information about the antenna beam (117) to the communication device (120), which antenna beam (117) will be perceived by the communication device (120) in time periods, which information relates to when in time a time period of the time periods starts and a duration of the time period, wherein a threshold on a channel quality required for uplink transmission is set such that a time duration when the threshold value is exceeded, the communication device (120) is covered by the antenna beam (117),
enabling the communication device (120) to refrain from attempting to receive or transmit data using the antenna beam (117), when being out of the time periods, based on the sent information, during which refraining, no power is consumed for attempting to receive or transmit data using the antenna beam (117).

7. Method according to claim 6, wherein the *sending* (405) information about the antenna beam (117) is performed by sending information about scheduling of a Discontinuous Reception, DRX, cycle and/or a Discontinuous Transmission, DTX, cycle, such that a passive part of the DRX and/or DTX cycle occurs when the communication device (120) is out of the time periods, wherein during the passive part of the DRX or DTX cycle the communication device (120) refrains from attempting to receive or transmit data using the antenna beam (117).

8. Method according to claim 6, wherein the *sending* (405) information about the antenna beam (117) is performed by sending information to the communication device (120) about scheduling pre-allocated resources for the communication device (120) for uplink or downlink transmission such that the pre-allocated resources occurs when being within the time period.

9. Method according to any of the claims 6-8, wherein the information relating to when in time a time period starts and a duration of the time period is obtained by
*measuring* (402) the direction to the communication device (120) to determine when in time the antenna beam (117) will cover a location of the communication device (120).

10. Method according any of claims 6-8, wherein the information relating to when in time a time period starts and a duration of the time period is obtained by
*selecting* (403) when in time the time period shall start and the duration the time period shall have, and
*measuring* (404) the direction to the communication device (120) to determine which direction to direct the antenna beam (117) to during the selected time period.

11. Method according to any of the claims 6-10, wherein the *directing* (401) an antenna beam (117) such that it provides coverage of different places in the cell (115) in different time periods is performed by any of:
continuously sweeping a 360° lap regularly in time with or without a time interval between each lap, and/or
stepwise covering a 360° lap with a specific angle in every step, and/or
moving the antenna beam (117) to subsequently cover different locations according to a regular or irregular pattern, providing predictable appearance of the antenna beam (117) in each covered location, and/or
directing the antenna beam (117) according to a scheme such that the communication device (120) is out of the time periods when a passive part of a DRX and/or DTX cycle of the communication device (120) occurs, by using spatial coordination of the antenna beam (117) and the direction of the communication device (120), wherein during the passive part of the DRX or DTX cycle the communication device (120) refrains from attempting to receive or transmit data using the antenna beam (117).

12. Method according to any of the claims 6-11, wherein a second communication device (121) is located in the cell (115), wherein a second antenna beam (118) is used, and wherein the *directing* (401) an antenna beam (117, 118) is performed by further directing the second antenna beam (118) such that it in second time periods provides coverage of a place in the cell (115) in which the second communication device (121) is located.

13. Method according to any of the claims 6-12, wherein a third communication device (122) is located in the cell (115), and wherein the antenna beam (117) is shaped such that it will be perceived by both the communication device (120) and the third communication device (122) in time periods.

14. A communication device (120) for reducing power consumption in the communication device (120), wherein the communication device (120) and a base station (110) are comprised in a cellular communications network (100), the communication device (120) comprising:
an obtaining unit (310) configured to obtain information about an antenna beam (117) of the base station (110), which antenna beam (117) will be dynamically controlled via a dynamically directional antenna arrangement, wherein the communication device (120) is configured to measure at least one antenna beam timing and inform the base station (110) of the measurement, so that the antenna beam (117) will be configured (110) based on the measured at least one antenna beam timing by the communication device (120), the measurement being based on detection of a channel condition, the antenna beam (117) being perceived by the communication device (120) in time periods, which information relates to when in time a time period of the time periods starts and a duration of the time period,
wherein the obtaining unit is further configured to obtain information about the antenna beam (117) by obtaining the information from the base station (110), and wherein a threshold on a channel quality required for uplink transmission is set such that a time duration when the threshold value is exceeded, the communication device (120) is covered by the antenna beam (117),
a processing unit (320) configured to refrain from attempting to receive or transmit data using the antenna beam (117) when being out of the time periods, based on the obtained information, during which refraining no power is consumed for attempting to receive or transmit data using the antenna beam (117).

15. A base station (110) for enabling reduction of power consumption in a communication device (120), wherein the communication device (120) and the base station (110) are comprised in a cellular communications network (100), and wherein the base station (110) serves a cell (115) comprising the communication device (120), the base station (110) comprising:
a beam antenna (710) configured to direct the antenna beam (117) such that it provides coverage of different places in the cell (115) at different time periods, which beam antenna is a dynamically directional antenna arrangement comprising one or more antennas or antenna elements, wherein the antenna beam (117) is configured based on measurement, performed by the communication device (120) and communicated to the base station (110), of at least one antenna beam timing based on detecting a channel condition,
a sending unit (720) configured to send information about the antenna beam (117) to the communication device (120), which antenna beam (117) will be perceived by the communication device (120) in time periods, which information relates to when in time a time period of the time periods starts and a duration of the time period, wherein a threshold on a channel quality required for uplink transmission is set such that a time when the threshold value is exceeded, the communication device (120) is covered by the antenna beam (117),
enabling the communication device (120) to refrain from attempting to receive or transmit data using the antenna beam (117) when being out of the time periods based on the sent information, during which refraining, no power is consumed for attempting to receive or transmit data using the antenna beam (117).

## Patentansprüche

1. Verfahren bei einem Kommunikationsgerät (120) zur Senkung des Energieverbrauchs beim Kommunikationsgerät (120), wobei das Kommunikationsgerät (120) und eine Basisstation (110) in einem zellularen Kommunikationsnetzwerk (100) umfasst sind, wobei das Verfahren Folgendes umfasst:
*Messen* von mindestens einer Antennenstrahlzeitsteuerung auf Grundlage von Erkennen eines Kanalzustandes,
*Erhalten* (201) von Informationen über einen Antennenstrahl (117) der Basisstation (110), wobei der Antennenstrahl (117) über eine dynamische Richtantennenanordnung dynamisch gesteuert wird, wobei das Kommunikationsgerät (120) die Basisstation (110) über die gemessene mindestens eine Antennenstrahlzeitsteuerung informiert, sodass der Antennenstrahl (117) durch die Basisstation (110) auf Grundlage der gemessenen mindestens einen Antennenstrahlzeitsteuerung konfiguriert wird, wobei der Antennenstrahl (117) durch das Kommunikationsgerät (120) in Zeiträumen erkannt wird, wobei sich die Informationen darauf beziehen, zu welchem Zeitpunkt ein Zeitraum der Zeiträume beginnt, sowie auf eine Dauer des Zeitraumes,
wobei das *Erhalten* (201) von Informationen über den Antennenstrahl (117) der Basisstation (110) durch Erhalten von Informationen von der Basisstation (110) durchgeführt wird, und wobei ein Schwellenwert für eine Kanalqualität, die zur Aufwärtsübertragung nötig ist, so eingestellt ist, dass für eine Zeitdauer, in der der Schwellenwert übertroffen wird, das Kommunikationsgerät (120) durch den Antennenstrahl (117) abgedeckt wird,
*Unterlassen* (202) eines Versuches, Daten unter Verwendung des Antennenstrahls (117) auf Grundlage der erhaltenen Informationen außerhalb der Zeiträume zu empfangen oder zu übermitteln, wobei während des Unterlassens kein Strom beim Versuch, Daten unter Verwendung des Antennenstrahls (117) zu empfangen oder zu übermitteln, verbraucht wird.

2. Verfahren nach Anspruch 1, wenn *Empfangen* oder *Übertragen* (203) von Daten von oder an die Basisstation (110) über einen Kanal unter Verwendung des Antennenstrahls (117) innerhalb des Zeitraumes liegt.

3. Verfahren nach einem der Ansprüche 1 - 2, wobei das *Erhalten* (201) von Informationen über einen Antennenstrahl (117) durchgeführt wird durch Empfangen von Informationen von der Basisstation (110) über das Einplanen für das Kommunikationsgerät eines diskontinuierlichen Empfangszyklus, DRX-Zyklus, und/oder eines diskontinuierlichen Übertragungszyklus, DTX-Zyklus, sodass ein passiver Teil des DRX- oder des DTX-Zyklus außerhalb der Zeiträume erfolgt, wobei das Kommunikationsgerät (120) während des passiven Teils des DRX- oder des DTX-Zyklus den Versuch unterlässt, Daten unter Verwendung des Antennenstrahls (117) zu empfangen oder zu übertragen.

4. Verfahren nach einem der Ansprüche 1 - 2, wobei das *Erhalten* (201) von Informationen über einen Antennenstrahl (117) durchgeführt wird durch Empfangen von Informationen von der Basisstation (110) über das Einplanen für das Kommunikationsgerät (120) von vorab zugewiesenen Ressourcen für Aufwärts- oder Abwärtsübertragungen, sodass die vorab zugewiesenen Ressourcen so eingeplant sind, dass sie erfolgen, wenn sie innerhalb des Zeitraumes liegen.

5. Verfahren nach einem der Ansprüche 2 - 4, wobei das Kommunikationsgerät (120), wenn es innerhalb eines Zeitraums liegt, ein Kommunikationsereignis nicht durch *Empfangen oder Übertragen* (203) von Daten von oder an die Basisstation (100) abgeschlossen hat, eines von Folgendem durchführt:
*Zurückkehren* (204) in einen Ruhezustand bis zu einem darauffolgenden Zeitraum, in dem der Antennenstrahl (117) durch das Kommunikationsgerät (120) erkannt wird, und, wenn der darauffolgende Zeitraum erfolgt, Fortsetzen des Kommunikationsereignisses; oder
*Verbleiben* (205) in einem verbundenen Zustand, und, wenn der darauffolgende Zeitraum erfolgt, Fortsetzen des Kommunikationsereignisses.

6. Verfahren in einer Basisstation (110) zum Ermöglichen einer Senkung des Energieverbrauches bei einem Kommunikationsgerät (120), wobei das Kommunikationsgerät (120) und die Basisstation (110) in einem zellularen Kommunikationsnetzwerk (100) umfasst sind, und wobei die Basisstation (110) eine Zelle (115) versorgt, die das Kommunikationsgerät (120) umfasst, wobei das Verfahren Folgendes umfasst:
*Ausrichten* (401) eines Antennenstrahls, sodass er Abdeckung von verschiedenen Orten in der Zelle (115) zu verschiedenen Zeiträumen bereitstellt, wobei der Antennenstrahl (117) über eine dynamische Richtantennenanordnung dynamisch gesteuert wird, wobei der Antennenstrahl (117) auf Grundlage von Messungen von mindestens einer Antennenstrahlzeitsteuerung auf Grundlage von Erkennen eines Kanalzustands konfiguriert wird, die vom Kommunikationsgerät (120) durchgeführt und an die Basisstation (110) kommuniziert werden,
*Senden* (405) von Informationen über den Antennenstrahl (117) an das Kommunikationsgerät (120), wobei der Antennenstrahl (117) durch das Kommunikationsgerät (120) in Zeiträumen erkannt wird, wobei sich die Informationen darauf beziehen, zu welchem Zeitpunkt ein Zeitraum der Zeiträume beginnt, sowie auf die Dauer des Zeitraumes, wobei ein Schwellenwert für eine Kanalqualität, die für Aufwärtsübertragungen nötig ist, so eingestellt ist, dass für eine Zeitdauer, in der der Schwellenwert übertroffen wird, das Kommunikationsgerät (120) durch den Antennenstrahl (117) abgedeckt wird,
Ermöglichen, dass das Kommunikationsgerät (120) den Versuch unterlässt, Daten unter Verwendung des Antennenstrahls (117) auf Grundlage der gesendeten Informationen außerhalb der Zeiträume zu empfangen oder zu übermitteln, wobei während des Unterlassens kein Strom beim Versuch, Daten unter Verwendung des Antennenstrahls (117) zu empfangen oder zu übermitteln, verbraucht wird.

7. Verfahren nach Anspruch 6, wobei das *Senden* (405) von Informationen über den Antennenstrahl (117) durchgeführt wird durch Senden von Informationen über das Einplanen eines diskontinuierlichen Empfangszyklus, DRX-Zyklus, und/oder eines diskontinuierlichen Übertragungszyklus, DTX-Zyklus, sodass ein passiver Teil des DRX- oder des DTX-Zyklus erfolgt, wenn das Kommunikationsgerät (120) außerhalb der Zeiträume liegt, wobei das Kommunikationsgerät (120) während des passiven Teils des DRX- oder des DTX-Zyklus den Versuch unterlässt, Daten unter Verwendung des Antennenstrahls (117) zu empfangen oder zu übertragen.

8. Verfahren nach Anspruch 6, wobei das *Senden* (405) von Informationen über den Antennenstrahl (117) durchgeführt wird durch Senden von Informationen an das Kommunikationsgerät (120) über das Einplanen für das Kommunikationsgerät (120) von vorab zugewiesenen Ressourcen für Aufwärts- oder Abwärtsübertragungen, sodass die vorab zugewiesenen Ressourcen erfolgen, wenn sie innerhalb des Zeitraumes liegen.

9. Verfahren nach einem der Ansprüche 6 - 8, wobei die Informationen in Bezug auf den Zeitpunkt, zu dem ein Zeitraum beginnt, sowie auf eine Dauer des Zeitraumes erhalten werden durch
*Messen* (402) der Ausrichtung zum Kommunikationsgerät (120), um zu bestimmen, zu welchem Zeitpunkt der Antennenstrahl (117) einen Ort des Kommunikationsgerätes (120) abdeckt.

10. Verfahren nach einem der Ansprüche 6 - 8, wobei die Informationen in Bezug auf den Zeitpunkt, zu dem ein Zeitraum beginnt, sowie auf eine Dauer des Zeitraumes erhalten werden durch
*Auswählen* (403), zu welchem Zeitpunkt der Zeitraum beginnen soll, sowie der Dauer, die der Zeitraum haben soll, und
*Messen* (404) der Ausrichtung zum Kommunikationsgerät (120), um zu bestimmen, in welche Ausrichtung der Antennenstrahl (117) während des ausgewählten Zeitraumes auszurichten ist.

11. Verfahren nach einem der Ansprüche 6 - 10, wobei das *Ausrichten* (401) eines Antennenstrahls (117), sodass er in verschiedenen Zeiträumen Abdeckung von verschiedenen Orten in der Zelle (115) bereitstellt, durch eines von Folgendem durchgeführt wird:
durchgehendes Abtasten einer 360°-Runde regelmäßig innerhalb der Zeit mit oder ohne ein Zeitintervall zwischen jeder Runde, und/oder
schrittweises Abdecken einer 360°-Runde mit einem bestimmten Winkel in jedem Schritt, und/oder
Bewegen des Antennenstrahls (117), um nachfolgend verschiedene Orte gemäß einem regelmäßigen oder unregelmäßigen Muster abzudecken, wobei ein vorhersehbares Auftauchen des Antennenstrahls (117) an jedem abgedeckten Ort bereitgestellt wird, und/oder
Ausrichten des Antennenstrahls (117) gemäß einem Schema, sodass sich das Kommunikationsgerät (120) außerhalb der Zeiträume befindet, wenn ein passiver Teil eines DRX- und/oder eines DTX-Zyklus des Kommunikationsgerätes (120) erfolgt, unter Verwendung von räumlicher Koordination des Antennenstrahls (117) und der Ausrichtung des Kommunikationsgerätes (120), wobei das Kommunikationsgerät (120) während eines passiven Teiles des DRX- oder des DTX-Zyklus den Versuch unterlässt, Daten unter Verwendung des Antennenstrahls (117) zu empfangen oder zu übertragen.

12. Verfahren nach einem der Ansprüche 6 - 11, wobei sich ein zweites Kommunikationsgerät (121) in der Zelle (115) befindet, wobei ein zweiter Antennenstrahl (118) verwendet wird, und wobei das *Ausrichten* (401) eines Antennenstrahls (117, 118) durchgeführt wird durch weiteres Ausrichten des zweiten Antennenstrahls (118), sodass er in zweiten Zeiträumen Abdeckung eines Ortes in der Zelle (115) bereitstellt, in der sich das zweite Kommunikationsgerät (121) befindet.

13. Verfahren nach einem der Ansprüche 6 - 12, wobei sich ein drittes Kommunikationsgerät (122) in der Zelle (115) befindet, und wobei der Antennenstrahl (117) so geformt ist, dass er sowohl von dem Kommunikationsgerät (120) als auch dem dritten Kommunikationsgerät (122) in Zeiträumen erkannt wird.

14. Kommunikationsgerät (120) zur Senkung des Energieverbrauches bei dem Kommunikationsgerät (120), wobei das Kommunikationsgerät (120) und eine Basisstation (110) in einem zellulären Kommunikationsnetzwerk (100) umfasst sind, wobei das Kommunikationsgerät (120) Folgendes umfasst:
eine Erhaltungseinheit (310), die dazu konfiguriert ist, Informationen über einen Antennenstrahl (117) der Basisstation (110) zu erhalten, wobei der Antennenstrahl (117) über eine dynamische Richtantennenanordnung dynamisch gesteuert wird, wobei das Kommunikationsgerät (120) dazu konfiguriert ist, mindestens eine Antennenstrahlzeitsteuerung zu messen und die Basisstation (110) über die Messung zu informieren, sodass der Antennenstrahl (117) auf Grundlage der durch das Kommunikationsgerät (120) gemessenen mindestens einen Antennenstrahlzeitsteuerung konfiguriert (110) wird, wobei die Messung auf Erkennung eines Kanalzustandes basiert, wobei der Antennenstrahl (117) durch das Kommunikationsgerät (120) in Zeiträumen erkannt wird, wobei sich die Informationen darauf beziehen, zu welchem Zeitpunkt ein Zeitraum der Zeiträume beginnt, sowie auf die Dauer des Zeitraumes,
wobei die Erhaltungseinheit ferner dazu konfiguriert ist, Informationen über den Antennenstrahl (117) durch Erhalten der Informationen von der Basisstation (110) zu erhalten, und wobei ein Schwellenwert für eine Kanalqualität, die zur Aufwärtsübertragung nötigt ist, so eingestellt ist, dass für eine Zeitdauer, in der der Schwellenwert übertroffen wird, das Kommunikationsgerät (120) durch den Antennenstrahl (117) abgedeckt wird,
eine Prozessoreinheit (320), die dazu konfiguriert ist, den Versuch zu unterlassen, Daten unter Verwendung des Antennenstrahls (117), wenn außerhalb der Zeiträume liegend, auf Grundlage der erhaltenen Informationen zu empfangen oder zu übermitteln, wobei während des Unterlassens kein Strom beim Versuch, Daten unter Verwendung des Antennenstrahls (117) zu empfangen oder zu übertragen, verbraucht wird.

15. Basisstation (110) zum Ermöglichen einer Senkung des Energieverbrauches bei einem Kommunikationsgerät (120), wobei das Kommunikationsgerät (120) und die Basisstation (110) in einem zellularen Kommunikationsnetzwerk (100) umfasst sind, und wobei die Basisstation (110) eine Zelle (115) versorgt, die das Kommunikationsgerät (120) umfasst, wobei die Basisstation (110) Folgendes umfasst:
eine Strahlantenne (710), die dazu konfiguriert ist, den Antennenstrahl (117) so auszurichten, dass er Abdeckung für verschiedene Orte in der Zelle (115) zu verschiedenen Zeiträumen bereitstellt, wobei die Strahlantenne eine dynamische Richtantennenanordnung ist, die ein(e) oder mehrere Antennen oder Antennenelemente umfasst, wobei der Antennenstrahl (117) auf Grundlage von Messungen von mindestens einer Antennenstrahlzeitsteuerung auf Grundlage von Erkennen eines Kanalzustandes konfiguriert wird, die durch das Kommunikationsgerät (120) durchgeführt und an die Basisstation (110) kommuniziert werden,
eine Sendeeinheit (720), die dazu konfiguriert ist, Informationen über den Antennenstrahl (117) an das Kommunikationsgerät (120) zu senden, wobei der Antennenstrahl (117) durch das Kommunikationsgerät (120) in Zeiträumen erkannt wird, wobei sich die Informationen darauf beziehen, zu welchem Zeitpunkt ein Zeitraum der Zeiträume beginnt, sowie auf die Dauer des Zeitraumes, wobei ein Schwellenwert für eine Kanalqualität, die zur Aufwärtsübertragung nötig ist, so eingestellt ist, dass für eine Zeitdauer, in der der Schwellenwert übertroffen wird, das Kommunikationsgerät (120) durch den Antennenstrahl (117) abgedeckt wird,
Ermöglichen, dass das Kommunikationsgerät (120) den Versuch unterlässt, Daten unter Verwendung des Antennenstrahls (117), wenn außerhalb der Zeiträume liegend, auf Grundlage der gesendeten Informationen außerhalb der Zeiträume zu empfangen oder zu übermitteln, wobei während des Unterlassens kein Strom beim Versuch, Daten unter Verwendung des Antennenstrahls (117) zu empfangen oder zu übermitteln, verbraucht wird.

## Revendications

1. Procédé dans un dispositif de communication (120) pour réduire la consommation d'énergie dans le dispositif de communication (120), dans lequel le dispositif de communication (120) et une station de base (110) sont compris dans un réseau de communications cellulaire (100), le procédé comprenant :
la mesure d'au moins un moment de faisceau d'antenne d'après la détection d'une condition de canal,
l'obtention (201) d'informations concernant un faisceau d'antenne (117) de la station de base (110), lequel faisceau d'antenne (117) sera commandé dynamiquement via un agencement d'antenne directionnelle dynamique, dans lequel le dispositif de communication (120) informe la station de base (110) de l'au moins un moment de faisceau d'antenne mesuré, si bien que le faisceau d'antenne (117) sera configuré par la station de base (110) d'après l'au moins un moment de faisceau d'antenne mesuré, lequel faisceau d'antenne (117) sera perçu par le dispositif de communication (120) dans des périodes, lesquelles informations concernent l'instant où une période des périodes démarre et une durée de la période,
dans lequel l'obtention (201) d'informations concernant le faisceau d'antenne (117) de la station de base (110) est réalisée par l'obtention des informations de la station de base (110), et dans lequel un seuil sur une qualité de canal requise pour une transmission en liaison montante est fixé de sorte que, lors d'une durée pendant laquelle la valeur seuil est dépassée, le dispositif de communication (120) soit couvert par le faisceau d'antenne (117),
le fait de s'abstenir (202) de tenter de recevoir ou de transmettre des données à l'aide du faisceau d'antenne (117), hors des périodes, d'après les informations obtenues, abstention pendant laquelle, aucune énergie n'est consommée pour tenter de recevoir ou transmettre des données à l'aide du faisceau d'antenne (117).

2. Procédé selon la revendication 1, comprenant, lorsqu'on est pendant la période, la réception ou la transmission (203) de données en provenance de ou à la station de base (110) sur un canal à l'aide du faisceau d'antenne (117).

3. Procédé selon l'une quelconque des revendications 1 et 2, dans lequel l'obtention (201) d'informations concernant un faisceau d'antenne (117) est réalisée par la réception d'informations en provenance de la station de base (110) concernant le dispositif de communication (120) relatives à un cycle de réception discontinue, DRX, et/ou un cycle de transmission discontinue, DTX, qui sont programmés, de sorte qu'une partie passive du cycle DRX ou DTX survienne hors des périodes, dans lequel, pendant la partie passive du cycle DRX ou DTX, le dispositif de communication (120) s'abstient de tenter de recevoir ou transmettre des données à l'aide du faisceau d'antenne (117).

4. Procédé selon l'une quelconque des revendications 1 et 2, dans lequel l'obtention (201) d'informations concernant un faisceau d'antenne (117) est réalisée par la réception d'informations en provenance de la station de base (110) concernant le dispositif de communication (120) relatives à des ressources préallouées qui sont programmées pour une transmission en liaison montante ou en liaison descendante de sorte que les ressources préallouées soient programmées pour survenir pendant la période.

5. Procédé selon l'une quelconque des revendications 2 à 4, comprenant, dans lequel lorsque le dispositif de communication (120) n'a pas achevé un évènement de communication par la réception ou la transmission (203) de données en provenance de ou à la station de base (110) pendant une période, la réalisation de l'un quelconque parmi :
le retour (204) à un état inactif jusqu'à une période ultérieure dans lequel le faisceau d'antenne (117) sera perçu par le dispositif de communication (120), et lorsque la période ultérieure survient, la poursuite de l'évènement de communication ; ou
le fait de rester (205) dans un état connecté, et lorsque la période ultérieure survient, la poursuite de l'évènement de communication.

6. Procédé dans une station de base (110) pour permettre une réduction de consommation d'énergie dans un dispositif de communication (120), dans lequel le dispositif de communication (120) et la station de base (110) sont compris dans un réseau de communications cellulaire (100), et dans lequel la station de base (110) dessert une cellule (115) comprenant le dispositif de communication (120), le procédé comprenant :
l'orientation (401) d'un faisceau d'antenne (117) de sorte qu'il fournisse une couverture d'endroits différents dans la cellule (115) à des périodes différentes, lequel faisceau d'antenne (117) sera commandé dynamiquement via un agencement d'antenne directionnelle dynamique, dans lequel le faisceau d'antenne (117) est configuré d'après une mesure, réalisée par le dispositif de communication (120) et communiquée à la station de base (110), d'au moins un moment de faisceau d'antenne d'après la détection d'une condition de canal,
l'envoi (405) d'informations concernant le faisceau d'antenne (117) au dispositif de communication (120), lequel faisceau d'antenne (117) sera perçu par le dispositif de communication (120) dans des périodes, lesquelles informations concernent un instant où une période des périodes démarre et une durée de la période, dans lequel un seuil sur une qualité de canal requise pour une transmission en liaison montante est fixé de sorte que, lors d'une durée pendant laquelle la valeur seuil est dépassée, le dispositif de communication (120) soit couvert par le faisceau d'antenne (117),
l'autorisation du dispositif de communication (120) de s'abstenir de tenter de recevoir ou de transmettre des données à l'aide du faisceau d'antenne (117), lorsqu'il est hors des périodes, d'après les informations envoyées, abstention pendant laquelle aucune puissance n'est consommée pour tenter de recevoir ou transmettre des données à l'aide du faisceau d'antenne (117).

7. Procédé selon la revendication 6, dans lequel l'envoi (405) d'informations concernant le faisceau d'antenne (117) est réalisé par l'envoi d'informations concernant la programmation d'un cycle de réception discontinue, DRX, et/ou d'un cycle de transmission discontinue, DTX, de sorte qu'une partie passive du cycle DRX et/ou DTX survienne lorsque le dispositif de communication (120) est hors des périodes, dans lequel, pendant la partie passive du cycle DRX ou DTX, le dispositif de communication (120) s'abstient de tenter de recevoir ou transmettre des données à l'aide du faisceau d'antenne (117).

8. Procédé selon la revendication 6, dans lequel l'envoi (405) d'informations concernant le faisceau d'antenne (117) est réalisé par l'envoi d'informations au dispositif de communication (120) concernant la programmation de ressources préallouées pour le dispositif de communication (120) pour une transmission en liaison montante ou en liaison descendante de sorte que les ressources préallouées surviennent pendant la période.

9. Procédé selon l'une quelconque des revendications 6 à 8, dans lequel les informations relatives à l'instant où une période démarre et une durée de la période sont obtenues par la mesure (402) de l'orientation vers le dispositif de communication (120) pour déterminer l'instant où le faisceau d'antenne (117) va couvrir un emplacement du dispositif de communication (120).

10. Procédé selon l'une quelconque des revendications 6 à 8, dans lequel les informations relatives à l'instant où une période démarre et une durée de la période sont obtenues par la sélection (403) de l'instant où la période va démarrer et la durée qu'aura la période, et
la mesure (404) de l'orientation vers le dispositif de communication (120) pour déterminer dans quelle orientation orienter le faisceau d'antenne (117) pendant la période sélectionnée.

11. Procédé selon l'une quelconque des revendications 6 à 10, dans lequel l'orientation (401) d'un faisceau d'antenne (117) de façon à ce qu'il fournisse une couverture d'endroits différents dans la cellule (115) dans des périodes différentes est réalisée par l'un quelconque parmi :
le balayage continu et régulier d'un tour de 360° avec ou sans intervalle de temps entre chaque tour, et/ou
la couverture par étapes d'un tour de 360° avec un angle spécifique à chaque étape, et/ou
le déplacement du faisceau d'antenne (117) pour couvrir ultérieurement des emplacements différents selon un diagramme régulier ou irrégulier, fournissant une apparition prévisible du faisceau d'antenne (117) dans chaque emplacement couvert, et/ou
l'orientation du faisceau d'antenne (117) selon un schéma de sorte que le dispositif de communication (120) soit hors des périodes lorsqu'une partie passive d'un cycle DRX et/ou DTX du dispositif de communication (120) survient, en utilisant une coordination spatiale du faisceau d'antenne (117) et l'orientation du dispositif de communication (120), dans lequel, pendant la partie passive du cycle DRX ou DTX, le dispositif de communication (120) s'abstient de tenter de recevoir ou transmettre des données à l'aide du faisceau d'antenne (117).

12. Procédé selon l'une quelconque des revendications 6 à 11, dans lequel un deuxième dispositif de communication (121) est situé dans la cellule (115), dans lequel un second faisceau d'antenne (118) est utilisé, et dans lequel l'orientation (401) d'un faisceau d'antenne (117, 118) est réalisée par l'orientation en outre du second faisceau d'antenne (118) de sorte que, pendant des secondes périodes, ils fournissent une couverture d'un endroit dans la cellule (115) dans laquelle le deuxième dispositif de communication (121) est situé.

13. Procédé selon l'une quelconque des revendications 6 à 12, dans lequel un troisième dispositif de communication (122) est situé dans la cellule (115), et dans lequel le faisceau d'antenne (117) est formé de sorte qu'il sera perçu à la fois par le dispositif de communication (120) et par le troisième dispositif de communication (122) dans des périodes.

14. Dispositif de communication (120) pour réduire la consommation d'énergie dans le dispositif de communication (120), dans lequel le dispositif de communication (120) et une station de base (110) sont compris dans un réseau de communications cellulaire (100), le dispositif de communication (120) comprenant :
une unité d'obtention (310) configurée pour obtenir des informations concernant un faisceau d'antenne (117) de la station de base (110), lequel faisceau d'antenne (117) sera commandé dynamiquement via un agencement d'antenne directionnelle dynamique, dans lequel le dispositif de communication (120) est configuré pour mesurer au moins un moment de faisceau d'antenne et informer la station de base (110) de la mesure, si bien que le faisceau d'antenne (117) sera configuré (110) d'après l'au moins un moment de faisceau d'antenne mesuré par le dispositif de communication (120), la mesure étant basée sur la détection d'une condition de canal, le faisceau d'antenne (117) étant perçu par le dispositif de communication (120) dans des périodes, lesquelles informations concernent l'instant où une période des périodes démarre et une durée de la période,
dans lequel l'unité d'obtention est en outre configurée pour obtenir des informations concernant le faisceau d'antenne (117) par l'obtention des informations de la station de base (110), et dans lequel un seuil sur une qualité de canal requise pour une transmission en liaison montante est fixé de sorte que, lors d'une durée pendant laquelle la valeur seuil est dépassée, le dispositif de communication (120) soit couvert par le faisceau d'antenne (117),
une unité de traitement (320) configurée pour s'abstenir de tenter de recevoir ou de transmettre des données à l'aide du faisceau d'antenne (117) hors des périodes, d'après les informations obtenues, abstention pendant laquelle aucune énergie n'est consommée pour tenter de recevoir ou transmettre des données à l'aide du faisceau d'antenne (117).

15. Station de base (110) pour permettre une réduction de consommation d'énergie dans un dispositif de communication (120), dans laquelle le dispositif de communication (120) et la station de base (110) sont compris dans un réseau de communications cellulaire (100), et dans laquelle la station de base (110) dessert une cellule (115) comprenant le dispositif de communication (120), la station de base (110) comprenant :
un faisceau d'antenne (710) configuré pour orienter le faisceau d'antenne (117) de sorte qu'il fournisse une couverture d'endroits différents dans la cellule (115) à des périodes différentes, lequel faisceau d'antenne est un agencement d'antenne directionnelle dynamique comprenant une ou plusieurs antennes ou éléments d'antenne, dans laquelle le faisceau d'antenne (117) est configuré d'après une mesure réalisée par le dispositif de communication (120) et communiquée à la station de base (110), d'au moins un moment de faisceau d'antenne d'après la détection d'une condition de canal,
une unité d'envoi (720) configurée pour envoyer des informations concernant le faisceau d'antenne (117) au dispositif de communication (120), lequel faisceau d'antenne (117) sera perçu par le dispositif de communication (120) dans des périodes, lesquelles informations concernent l'instant où une période des périodes démarre et une durée de la période, dans laquelle un seuil sur une qualité de canal requise pour une transmission en liaison montante est fixé de sorte que, lors d'un instant où la valeur seuil est dépassée, le dispositif de communication (120) soit couvert par le faisceau d'antenne (117),
l'autorisation au dispositif de communication (120) de s'abstenir de tenter de recevoir ou transmettre des données à l'aide du faisceau d'antenne (117) hors des périodes d'après les informations envoyées, abstention pendant laquelle aucune énergie n'est consommée pour tenter de recevoir ou transmettre des données à l'aide du faisceau d'antenne (117).
